Europäisches Patentamt

(19) European Patent Office

Office européen des brevets

(11) **EP 0 964 025 A1**

(12) **EUROPEAN PATENT APPLICATION**

(43) Date of publication:
15.12.1999 Bulletin 1999/50

(51) Int. Cl.[6]: **C08K 3/00**, C08L 23/02,
C08J 5/18
// (C08L23/02, 23:02, 101:00)

(21) Application number: 99110916.6

(22) Date of filing: 04.06.1999

(84) Designated Contracting States:
AT BE CH CY DE DK ES FI FR GB GR IE IT LI LU
MC NL PT SE
Designated Extension States:
AL LT LV MK RO SI

(30) Priority: 08.06.1998 JP 15925798

(71) Applicant:
Sumitomo Chemical Company, Limited
Chuo-ku Osaka 541-8550 (JP)

(72) Inventors:
• Seiichiro, Ima
Sodegaura-shi, Chiba (JP)
• Hiroyuki, Harada
Daijuku, Sodegaura-shi, Chiba (JP)
• Hiroyuki, Shiraishi
Ichihara-shi, Chiba (JP)

(74) Representative:
VOSSIUS & PARTNER
Siebertstrasse 4
81675 München (DE)

(54) **Polyolefin resin composition**

(57) The invention provides a polyolefin resin composition comprising 100 parts by weight of a polyolefin resin and 0.01 to 2.0 parts by weight of an anti-blocking agent (C) comprising 40% to 90% by weight of an anti-blocking agent component (A) in a substantially spherical form having a weight average particle diameter of from 1.5 $\mu$m to less than 4.0 $\mu$m, and 60% to 10% by weight of an anti-blocking agent component (B) in a substantially spherical form having a weight average particle diameter of from 4.0 $\mu$m to 7.0 $\mu$m, wherein the content of a component having a particle diameter of 15 $\mu$m or more in the anti-blocking agent (C) is 1.0% by weight or less, and the difference between the weight average particle diameter of the anti-blocking agent component (A) and that of the anti-blocking agent component (B) is from 0.5 $\mu$m to 5.0 $\mu$m.

EP 0 964 025 A1

**Description**

The present invention relates to a polyolefin resin composition and a film thereof. More precisely, the present invention relates to a polyolefin resin composition comprising an anti-blocking agent having a specific particle size distribution, and a film thereof.

Films made of a polyolefin resin such as polyethylene and polypropylene were used for wide application such as wrapping materials for food , fiber products, pharmaceuticals, fertilizers, sundry goods and agricultural covering materials. These films made of a polyolefin resin contain an anti-blocking agent such as silica, talc or zeolite and a lubricant such as organic acid amides, in order to improve workability during film processing steps, printing steps or bag making steps.

A problem arises, however, that the transparency of the film is lowered and the appearance thereof is deteriorated, when a large amount of the anti-blocking agent is added in order to improve the blocking resistance of the film. In addition, sometimes another problem arises in that scratch marks occur on the surface of the film by friction between films e.g. during transportation.

Moreover, a further problem possibly arises in that the fabricability becomes poor due to staining of guide rolls during bag making or printing steps, when an anti-blocking agent and a large amount of a lubricant are added in order to improve the blocking resistance of the film.

Attempts for improving a balance among various properties of films, considering also the fabricability, have been disclosed in JP-A-7-258478 and JP-A-8-92428. JP-A-7-258478 discloses a polyolefin resin composition which has two kinds of anti-blocking agents and contains 10 to 40% by weight of an anti-blocking agent having the particle size of 1.5 times or more as many as the weight average particle diameter, in relation to haze as an indicator for transparency, blocking property, slipping property, and various properties for fabricability such as scratch resistance and guide roll staining.

While the fabricability could be improved by this attempt, as for the transparency thereof, their see through property (that is flickering of the films) was not at a satisfactory level due to the existence of particles having a large diameter. JP-A-8-92428 discloses a use of anti-blocking agents having two or more maximum values, in which the difference between the maximum values is 3.0 μ or more. Again, the fabricability could be improved by this attempt but the see through property thereof was not at a satisfactory level because the difference between the maximum values was 3.0 μ or more.

An object of the present invention is to provide a polyolefin resin composition leading to a film having excellent appearance, which is superior in balance among transparency, see through property, i.e. flickering, and blocking resistance, and superior in slipping property and fabrication quality such as scratch resistance and roll-staining property, and to provide a film thereof.

This object could be achieved on the basis of the finding that films can be obtained which are superior in the properties described above and excellent in appearance when the films are produced from a polyolefin resin composition containing a specific amount of an anti-blocking agent having a specific particle size distribution.

Accordingly, the present invention relates to a polyolefin resin composition comprising 100 parts by weight of a polyolefin resin and 0.01 part by weight or more and less than 2.0 parts by weight of an anti-blocking agent (C) comprising 40% to 90% by weight of an anti-blocking agent component (A) having a weight average particle diameter of from 1.5 μm to less than 4.0 μm, and 60% to 10% by weight an anti-blocking agent component (B) having a weight average particle diameter of from 4.0 μm to 7.0 μm, wherein the content of a component having a particle diameter of 15 μm or more in the anti-blocking agent (C) is 1.0% by weight or less, the ratio of particles of the anti-blocking agent component (A) or the anti-blocking agent component (B), respectively, having a particle size of 1.5 times or more than the weight average particle diameter is less than 10 %, and the difference between the weight average particle diameter of the anti-blocking agent component (A) and that of the anti-blocking agent component (B) is from 0.5 μm to less than 3.0 μm.

Further, the present invention relates to such a polyolefin resin composition further comprising 0.4 part by weight or less of a fatty acid amide compound based on 100 parts by weight of the polyolefin resin.

Also, the present invention relates to a film comprising a polyolefin resin composition as defined above.

The present invention will be described below in more detail.

The polyolefin resin used in the present invention includes a resin obtained by an ionic or by a radical polymerization process. The polyolefin resin includes, for example, olefin homopolymers such as polyethylene, polypropylene, polybutene-1 and poly-4-methylpentene-1; ethylene-α-olefin copolymers such as ethylene-propylene copolymer, ethylene-butene-1 copolymer, ethylene-4-methylpenetene-1 copolymer, ethylene-hexene-1 copolymer, ethylene-octene-1 copolymer and ethylene-decene-1 copolymer; and propylene-α-olefin copolymers such as propylene-4-methylpenetene-1 copolymer, propylene-butene-1 copolymer and propylene-ethylene-butene-1 copolymer.

Other possible examples are copolymers of α-olefin and multiple-unsaturated compounds such as conjugated dienes or non-conjugated dienes. Furthermore, the resin includes, in addition to ethylene-α-olefin copolymers, copoly-

EP 0 964 025 A1

mers of ethylene with an unsaturated carboxylic acid such as acrylic acid, methacrylic acid and maleic acid as well as esters thereof and acid anhydride thereof; and copolymers of ethylene with a vinyl ester such as vinyl acetate. These are also applied to copolymer of propylene as same as copolymer of ethylene. Among them, ethylene containing copolymer is preferable, particularly preferred resins are copolymers of ethylene with an $\alpha$-olefin having 3 to 10 carbon atoms. The content of $\alpha$-olefin is preferably 0.5 to 30% by weight. These olefin resins may be used independently or in combination thereof. In particular, a mixture of copolymers of ethylene with an $\alpha$-olefin having 3 to 10 carbon atoms, and low density polyethylene obtained by a high pressure method is preferable.

The density of the polyolefin resin used in the present invention is preferably 0.880 to 0.970 g/cm$^3$, more preferably 0.890 to 0.940 g/cm$^3$. The melt flow rate thereof is preferably 0.1 to 50 g/10 minutes, more preferably of 0.2 to 20 g/10 minutes.

The anti-blocking agent used in the present invention is an anti-blocking agent (C) comprising 40% to 90% by weight of an anti-blocking agent component (A) having a weight average particle diameter of from 1.5 $\mu$m to less than 4.0 $\mu$m, preferably from 2.0 to less than 4.0 $\mu$m, and 60% to 10% by weight of an anti-blocking agent component (B) having a weight average particle diameter of from 4.0 $\mu$m to 7.0 $\mu$m, preferably from 4.0 to 5.5 $\mu$m, and the content of a component having a particle diameter of 15 $\mu$m or more in the anti-blocking agent (C) is 1.0% by weight or less, preferably 0.5% by weight or less, the ratio of particles of the anti-blocking agent component (A) or the anti-blocking agent component (B), respectively, having a particle size of 1.5 times or more than the weight average particle diameter is less than 10 %, and the difference between the weight average particle diameter of the anti-blocking agent component (A) and that of the anti-blocking agent component (B) is from 0.5 $\mu$m to less than 3.0 $\mu$m preferably from 0.5 $\mu$m to less than 2.8 $\mu$m, more preferably from 0.5 $\mu$m to less than 2.5 $\mu$m.

When the ratio of particles of the anti-blocking agent component (A) or the anti-blocking agent component (B), respectively, having a particle size of 1.5 times or more than the weight average particle diameter is 10 % or more, films can not be obtained which have superior appearance, transparence and good see through property with little flicker.

The anti-blocking agent component (A) and (B) are preferably of substantially spherical forms.

When the difference between the weight average particle diameter of the anti-blocking agent component (A) and that of the component (B) are outside of the range described above, films can not be obtained which have superior appearance and well-balanced transparency and blocking resistance, which are objectives of the present invention.

When the anti-blocking agent component (A) and the component (B) are not substantially spherical, then films can not be obtained which are sufficient in appearance, as well as in properties relating to fabrication quality, such as slipping property, scratch resistance and so on. The term "substantially spherical" herein is defined by the circularity coefficient S, calculated by the following equation (1), upon photographing an image observed under an optical microscope and processing the obtained image by an image analyzer:

$$S = 4\pi \times A/L^2 \tag{1}$$

wherein A is the area of the image and L is the length of the circumference (distance round).

When the image is approximately a circle, the circularity coefficient S approaches to 1. For the case of the components (A) and (B) in the above-described anti-blocking agent, the circularity coefficient S is preferably 0.600 to 1.00, more preferably 0.630 to 1.000, more preferably 0.700 to 1.000.

In addition, when the difference between the weight average particle diameter of the anti-blocking agent component (A) and that of the anti-blocking agent component (B) is less than 0.5 $\mu$m, then sufficient improving effects can not be obtained in appearance, blocking resistance and roll-staining property, because the distribution approaches to that of being monodisperse. Likewise, a difference exceeding 3.0 $\mu$m is not preferred because the appearance, transparency and see through property, i.e. flickering of films, tend downward.

Furthermore, when the content of a component having a particle diameter of 15 $\mu$m or more in the anti-blocking agent (C) exceeds 1.0% by weight, some of the purposes of the present invention including the improvement of appearance, transparency and see through property, i.e. flickering of films, can not be attained.

The kind of the anti-blocking agent used in the present invention is not particularly limited and includes, for example, an inorganic anti-blocking agent and an organic anti-blocking agent.

The inorganic anti-blocking agent includes, for example, synthetic anti-blocking agents such as synthetic silica and crystalline or amorphous powdery aluminosilicate.

These may be subjected to surface treatment with a higher fatty acid such as stearic acid, a titanium coupling agent or a silica coupling agent.

The organic synthetic anti-blocking agent include, for example, powders of cross-linked acrylic resin, cross-linked polyethylene resin, cross-linked polystyrene resin, cross-linked silicone resin, polyamide resin and polyester resin. Among them, powdery cross-linked methyl poly-methacrylate is preferred. Similarly to the inorganic anti-blocking agent, the organic synthetic anti-blocking agent may be subjected to surface treatment with a higher fatty acid such as stearic acid, titanium coupling agents or silica coupling agents.

The anti-blocking agent may also be selected from the commercially available products to meet the requirement of the present invention. The commercially available products of the inorganic anti-blocking agent include, for example, "SILTON JC" (manufactured by Mizusawa Industrial Chemicals, Ltd.), "SYLOSPHERE" (manufactured by Fuji Sylisia) and others. The commercially available products of the organic anti-blocking agent include, for example, "MATUMOTO MICROSPHERE-M" (manufactured by Matsumoto Yushi-Seiyaku Co., Ltd.), "JURIMERE MB-SX" (manufactured by Nippon Junyaku Co., Ltd.) and "Epostar MA" (manufactured by Nippon Shokubai Co., Ltd.).

The anti-blocking agent (C) containing the anti-blocking agent components (A) and (B) includes (1) anti-blocking agents composed of a mixture of the two kinds of anti-blocking agents namely the component (A) and the component (B), (2) anti-blocking agents having the component (A) and the component (B) described above in the anti-blocking agent.

The mixed system according to (1) described above includes, for example, a mixture among organic anti-blocking agents, a mixture among inorganic anti-blocking agents and a mixture of an organic anti-blocking agent with an inorganic anti-blocking agent. Specifically, the system includes a mixture among powdery cross-linked acrylic resins, a mixture of a powdery cross-linked acrylic resin with a powdery cross-linked silicone resin, a mixture of a powdery cross-linked acrylic resin with a powdery polystyrene resin, a mixture of a powdery cross-linked acrylic resin with a powdery synthetic aluminosilicate, a mixture among powdery synthetic aluminosilicates and a mixture of a powdery cross-linked acrylic resin with a synthetic silica.

The system according to (2) includes a synthetic anti-blocking agent which is controlled so as to obtain a particle size distribution as defined for the component (A) and the component (B) at the production of synthetic anti-blocking agent.

The particle size distribution of the anti-blocking agent used in the present invention can be measured with a measuring apparatus for particle size distribution according to the Coulter counter method.

The ratio of mixing of the anti-blocking agent component (A) with the component (B) is 40 to 90% by weight of (A) to 60 to 10% by weight of (B). When the proportion of the anti-blocking agent (A) is less than 40% by weight, then the film appearance becomes poor, and when the proportion exceeds 90% by weight, then the blocking property becomes poor.

The amount of the anti-blocking agent (C) containing the anti-blocking agent component (A) and the component (B) is 0.01 to 2.0 parts by weight, preferably 0.05 to 0.6 part by weight, based on 100 parts by weight of the polyolefin resin. When the amount is less than 0.1 part by weight, then the improving effect of blocking property is little, and on the contrary, when the amount exceeds 2.0 parts by weight, then the optical property becomes poor.

It is preferred to contain a fatty acid amide compound in the polyolefin resin composition of the present invention. The use of the fatty acid amide compound allows for an improvement of the blocking resistance as well as an improvement of slipping property and scratch resistance.

The amount of the fatty acid amide compound to be mixed is preferably 0.4 part by weight or less, more preferably 0.01 to 0.4 part by weight and further more preferably 0.05 to 0.3 part by weight, based on 100 parts by weight of the polyolefin resin.

The fatty acid amide compound includes, for example, a saturated fatty acid amide, an unsaturated fatty acid amide a saturated fatty acid bisamide and an unsaturated fatty acid bisamide, and these may be used independently or in a combination thereof.

The saturated fatty acid amide includes, for example, palmitic acid amide, stearic acid amide, and behenic acid amide.

The unsaturated fatty acid amide includes, for example, oleic acid amide and erucic acid amide.

The saturated fatty acid bisamide includes, for example, ethylene bis-palmitic acid amide, ethylene bis-stearic acid amide and hexamethylene bis-stearic acid amide.

The unsaturated fatty acid bisamide includes, for example, ethylene bis-oleic acid amide, hexamethylene bis-oleic acid amide and N,N'-dioleylsebacic acid amide.

The process for producing the polyolefin resin composition of the present invention is not particularly limited and the composition can be obtained by homogeneously melt-kneading each ingredient used in the invention. The process includes known processes, for example, a process in which the ingredients are mixed in a tumbling blender or Henschel mixer and then melt-kneaded and granulated with a single-screw extruder or a multi-screw extruder, or a process in which the ingredients are melt-kneaded in a kneader, a Banbury mixer and then granulated with an extruder.

In addition, the polyolefin resin composition of the present invention can also be obtained by mixing the polyolefin resin with the anti-blocking agent at a high concentration under melt condition to give master pellets, and adding a required amount of the polyolefin resin to the mixture. The same process as described above can also be applied to the case in which the fatty acid amide compound is added.

The polyolefin resin composition of the present invention can contain known additives, as required, such as usually used antioxidants, antistatic agents, weather resistant agents, ultraviolet absorbing agents, anti-fogging agents and pigments insofar as the purpose of the invention is not inhibited.

The polyolefin resin composition of the present invention can be molded by inflation process such as an air cooling blown film extrusion process or a water cooling blown film extrusion process. The film thickness is usually 5 to 200 μm.

The polyolefin resin composition of the present invention may be shaped independently or laminated with another thermoplastic resin composition. In laminating, it is preferred to form a laminate so that the resin composition of the invention is placed on both or one side of the outer layer.

In exemplary lamination, the polyolefin resin composition of the invention can be molded by co-extruding inflation with one or more other resin such as polyethylene, polypropylene, ethylene-vinyl acetate copolymer, polyamide and polyester to give a co-extrusion film having two or more layers. In addition, it is also possible that the polyolefin resin composition of the invention is molded by single extrusion or co-extrusion and then subjected to dry lamination or sandwich lamination with an oriented or non-oriented film or sheet of polypropylene, polyester or polyamide, aluminum foil, cellophane, paper, or a composite film or sheet to give a laminated film or laminated sheet.

EXAMPLES

The present invention will now be described in detail with Examples and Comparative Examples, which should not be construed as a limitation upon the scope of the invention.

Materials used in Examples and Comparative Examples are shown below.

(1) Polyolefin resins

1) PO-1

Ethylene-butene-1 copolymer (SUMIKASEN-L FS150B, MFR = 0.8 g/10 minutes, d = 0.921 g/cm$^3$, manufactured by Sumitomo Chemical Co., Ltd.)

2) PO-2

Polythylene (SUMIKASEN F200-0, MFR = 2.0 g/10 minutes, d =0.923 g/cm$^3$,manufactured by Sumitomo Chemical Co.,Ltd.)

PO-1 was produced by a gas phase polymerization process with a Ziegler catalyst system. PO-2 was produced by a high pressure radical polymerization process.

MFR represents the melt flow rate measured at 190°C under a load of 2.16 kg, and d represents the density.

(2) Anti-blocking agents

Anti-blocking agents listed below were used independently, or in a mixture thereof, in Examples and Comparative Examples.

1) ABA-1

Powdery aluminum silicate (SILTON JC-30, weight average particle diameter : 3.2 μm, ratio of particles having a particle size of 1.5 times or more than the weight average particle diameter : 6.6%, amount of particle having a size of 15 μm or more : 0% by weight, circularity coefficient S : 0.747, manufactured by Mizusawa Industrial Chemicals, Co., Ltd.)

2) ABA-2

Powdery aluminum silicate (SILTON JC-40, weight average particle diameter : 4.5 μm, ratio of particles having a particle size of 1.5 times or more than the weight average particle diameter :8.3%, amount of particle having a size of 15 μm or more : 0% by weight, circularity coefficient S : 0.714, manufactured by Mizusawa Industrial Chemicals, Co., Ltd.)

3) ABA-3

Powdery aluminum silicate (SILTON JC-50, weight average particle diameter : 5.3 μm, ratio of particles having a particle size of 1.5 times or more than the weight average particle diameter : 9.8%, amount of particle having a size of 15 μm or more : 0.2% by weight, circularity coefficient S : 0.725, manufactured by Mizusawa Industrial Chemicals, Co., Ltd.)

4) ABA-4

Powdery cross-linked poly-methyl methacrylate resin (Epostar MA1004, weight average particle diameter : 4.0 μm, ratio of particles having a particle size of 1.5 times or more than the weight average particle diameter :9.6%, amount of particle having a size of 15 μm or more : 0% by weight, circularity coefficient S : 0.739, manufactured by Nippon Shokubai Co., Ltd.)

5) ABA-5

Powdery cross-linked poly-methyl methacrylate resin (Epostar MA1013, weight average particle diameter : 13.5 μm, ratio of particles having a particle size of 1.5 times or more than the weight average particle diameter :13.1%, amount of particle having a size of 15 μm or more : 42% by weight, circularity coefficient S : 0.728, manufactured by Nippon Shokubai Co., Ltd.)

6) ABA-6

Powdery cross-linked poly-methyl methacrylate resin (SEAHOSTER KE-P100, weight average particle diameter : 1.3 μm, ratio of particles having a particle size of 1.5 times or more than the weight average particle diameter :6.4%, amount of particle having a size of 15 μm or more : 0% by weight, circularity coefficient S : 0.752, manufactured by Nippon Shokubai Co., Ltd.)
The ingredients 1) to 6) described above have respectively a spherical shape and are anti-blocking agents having a monodisperse distribution with a sole maximal value (maximum) in the weight based particle size distribution. The standard deviation of the particle size distribution is about 1 to 4 μm.

7) ABA-7

Powdery calcined kaolin (INSULITE MC-6, weight average particle diameter : 3.0 μm, ratio of particles having a particle size of 1.5 times or more than the weight average particle diameter :18.7%, amount of particle having a size of 15 μm or more : 6.6% by weight, circularity coefficient S : 0.588, manufactured by Mizusawa Industrial Chemicals,Co., Ltd.)
The ingredient 7) described above is amorphous and its standard deviation of the particle size distribution is about 6 to 8 μm.

Production of Master Batches for Anti-blocking Agent

The anti-blocking agent to be contained in the polyolefin resin was prepared by previously melt-kneading respective anti-blocking agents with the same polyolefin resin to a concentration of 10% by weight with a Banbury mixer to form a master batch and, if necessary, mixing two or more master batches to meet the requirement defined in the present invention.
The master batch of fatty acid amid compound was prepared by melt-kneading the compound with the same polyolefin resin to a concentration of 2.0% by weight with a Banbury mixer to form the batch.
Measurement of various properties in Examples and Comparative Examples were performed by the following methods.

(1) Weight average particle diameter and particle size distribution

The measurement was carried out by using a model TA-II Coulter counter, manufactured by Coulter Co., Ltd., at an aperture diameter of 20 to 200 μ and with an electrolyte Isoton II.

(2) Circularity coefficient S

Calculation of the circularity coefficient is shown as follows:
The circularity coefficient S was calculated by the following equation (1), by photographing an image containing 20 or more particles observed at a magnification of 800 under an optical microscope and processing the obtained image by an image analyzer (Image Analyzer V10, manufactured by Toyo Ba Co., Ltd.):

$$S = 4\pi \times A/L^2 \tag{1}$$

wherein A is the area of the image and L is the length of the circumference (distance round).

(3) Haze (transparency)

The measurement was carried out according to ASTM D1003-61. A smaller value indicates that the transparency is superior.

(4) LSI (see-through sensation)

A molded film was conditioned at 23 ± 2°C and 50 ± 5% RH for 24 hours or more, then assayed for scattered transmission light at ± 0.4° to 1.2° using a LSI tester manufactured by Toyo Seiki Co., Ltd. and the obtained value was taken as a measure of see-through sensation. A smaller value indicates that the see-through sensation is superior.

(5) Shear blocking

A molded film was conditioned at 23 ± 2°C and 50 ± 5% RH for 24 hours or more. Then two sheets of formed film were closely contacted in an oven kept at 40°C for 7 days under a load of 400 g/cm$^2$ and tested for a maximum stress required for shear-peeling at 50 cm$^2$ of the contacted film surface by a cross-head constant rate tensile tester at a tensile velocity of 200 mm/minute. The obtained value was taken as an indicator for blocking resistance. A smaller value indicates that the blocking resistance is superior.

(6) Angle of friction $\tan\theta$ (slipping property)

A piece of test film of 160 mm (length) × 80 mm (width) was placed on a inclined plate of a friction angle tester, manufactured by Toyo Seiki Co. Ltd., and a sled of 100 mm (length) × 65 mm (width) weighing 1 kg and having a piece of test film at the underside thereof was overlaid. The angle θ at which the sled began to move was recorded by increasing the inclination at a velocity of 2.7°/second and represented by $\tan\theta$. A smaller value indicates that the slipping property is superior.

(7) Scratch property of film

A molded film was conditioned at 23 ± 2°C and 50 ± 5% RH for 24 hours or more. Then two sheets of formed film were closely contacted. One film (test film for measuring scratch property) was fixed on a shaker placing without loosening and wrinkle on a soft material which was not marring the film. The other film was fixed on a metal pipe through a rod covered with a silicone rubber sheet. The films were rubbed together for 1 minute at an amplitude of 40 mm and a shaking velocity of 60 times/minute.
The haze of the formed films before and after rubbing was measured according to ASTM D1003-61 and the difference between values was named as Δ haze and taken as an indicator for scratch property of film. A smaller haze value indicates that the slipping property is superior.

(8) Staining of guide rolls

A film of 400 m obtained by the air cooling blown film extrusion process was wound around a paper cylinder. After conditioning in an oven kept at 40°C for 3 days, the film was rewound with a slitter NSTC 100, manufactured by Nishimura MFG. Co., Ltd., under conditions including a line velocity of 20 m/minute and an unwinding brake force of 15 kg.m. Then staining of guide rolls was observed and taken as an indicator for fabrication quality.

◎:   No staining was observed on the guide rolls (i.e. the fabrication quality was very good).
○:   A little staining was observed on the guide rolls but was not a matter of problem (i.e. the fabrication quality was good).
△:   Staining was observed on the guide rolls, which was matter of problem (i.e. the fabrication quality was bad).
X:   Staining was observed on the guide rolls and sometimes stain adhered on the rolls was transferred to the film, which was a matter of problem (i.e. the fabrication quality was very bad).

(9) visual appearance

A film obtained by the air cooling blown film extrusion process was visually observed by plural panelists for see-through sensation and flickering (frequency of grains of about 50 to 100 $\mu$m). The appearance of film was judged by generalizing the observation. The judged result was taken as an indicator for visual appearance.

◎: All the panelists judged that the appearance was good (i.e. the visual appearance was very good).
○: Almost all the panelists judged that the appearance was good (i.e. the visual appearance was good).
△: Excepting part of panelists, half or more panelists judged that the appearance was unsatisfactory (i.e. the visual appearance was bad).
X: All the panelists judged that the appearance was unsatisfactory (i.e. the visual appearance was very bad).

(10) Comprehensive evaluation

The comprehensive evaluation of film performance was indicated using a 3-class scoring system based on the visual appearance, the balance between the transparency and the blocking resistance, and the fabrication quality of films.

○: The balance between the appearance and practical physical property was good.
△: The balance between the appearance and practical physical property was slightly bad.
X: The balance between the appearance and practical physical property was bad and the film could not be used in practical application.

Examples 1 - 4 and Comparative Examples 1 - 6

Ingredients in amounts shown in Tables 1 and 2 were subjected to dry blending in a tumbler mixer. The mixture was extruded with a inflation molding machine, manufactured by Placo Co., Ltd., comprising a 50 mm $\phi$ single-screw extruder, at an extruding rate of 25 kg/hr and die temperature of 200°C to give a single layer film having a thickness of 30 $\mu$m. The results of evaluation of the obtained film are shown in Tables 3 and 4.

Table 1

|  | Examples | | | |
|---|---|---|---|---|
|  | 1 | 2 | 3 | 4 |
| Composition |  |  |  |  |
| Polyolefin Resin |  |  |  |  |
| Name | P0-1 | P0-1 | P0-1 | P0-1 |
| Amount, part by weight | 80 | 80 | 80 | 80 |
| Name | P0-2 | P0-2 | P0-2 | P0-2 |
| Amount, part by weight | 20 | 20 | 20 | 20 |
| Anti-blocking Agent (A) |  |  |  |  |
| Name | ABA-1 | ABA-1 | ABA-1 | ABA-1 |
| Amount, part by weight | 0.2 | 0.2 | 0.3 | 0.3 |
| Anti-blocking Agent (B) |  |  |  |  |
| Name | ABA-3 | ABA-3 | ABA-3 | ABA-4 |
| Amount, part by weight | 0.1 | 0.2 | 0.1 | 0.05 |
| Particle Size Distribution based on weight |  |  |  |  |
| Difference in average Particle Diameter | 2.1 | 2.1 | 2.1 | 0.9 |
| Proportion of Particles $\geq$ 15 $\mu$m, % by weight | <0.1 | <0.1 | <0.1 | <0.1 |
| Fatty Acid Amide Compound Amount, part by weight | 0.22 | 0.22 | 0.22 | 0.22 |

Table 2

| | Comparative examples | | | | | |
|---|---|---|---|---|---|---|
| | 1 | 2 | 3 | 4 | 5 | 6 |
| Composition | | | | | | |
| Polyolefin Resin | | | | | | |
| Name | PO-1 | PO-1 | PO-1 | PO-1 | PO-1 | PO-1 |
| Amount, part by weight | 80 | 80 | 80 | 80 | 80 | 80 |
| Name | PO-2 | PO-2 | PO-2 | PO-2 | PO-2 | PO-2 |
| Amount, part by weight | 20 | 20 | 20 | 20 | 20 | 20 |
| Anti-blocking Agent (A) | | | | | | |
| Name | - | ABA-1 | - | ABA-1 | ABA-6 | ABA-7 |
| Amount, part by weight | - | 0.4 | - | 0.3 | 0.3 | 0.2 |
| Anti-blocking Agent (B) | | | | | | |
| Name | - | - | ABA-3 | ABA-5 | ABA-3 | ABA-2 |
| Amount, part by weight | - | - | 0.4 | 0.1 | 0.1 | 0.3 |
| Particle Size Distribution based on weight | | | | | | |
| Difference in average Particle Diameter | - | - | - | 10.5 | 4.0 | 1.5 |
| Proportion of Particles $\geq 15\ \mu m$, % by weight | - | 0 | 0.2 | 10.5 | <0.1 | 2.7 |
| Fatty Acid Amide Compound Amount, part by weight | 0.22 | 0.22 | 0.22 | 0.22 | 0.22 | 0.22 |

Table 3

| | Examples | | | |
|---|---|---|---|---|
| | 1 | 2 | 3 | 4 |
| Haze, % | 4.8 | 4.8 | 5.1 | 5.0 |
| LSI, % | 8.8 | 9.8 | 8.9 | 7.7 |
| Shear blocking, g/50cm$^2$ | 760 | 710 | 690 | 710 |
| Angle of Friction (tan $\theta$) | 0.17 | 0.17 | 0.14 | 0.14 |
| Scratching Property $\Delta$H% | 2.7 | 5.4 | 3.6 | 0.9 |
| Staining Roll Property | ○ | ○ | ○ | ○ |
| Visual Appearance | ◎ | ○ | ○ | ◎ |
| Comprehensive Evaluation | ○ | ○ | ○ | ○ |

Table 4

| | Comparative examples | | | | | |
|---|---|---|---|---|---|---|
| | 1 | 2 | 3 | 4 | 5 | 6 |
| Haze, % | 3.4 | 4.9 | 5.0 | 5.3 | 6.2 | 5.7' |
| LSI, % | 2.5 | 7.6 | 12 | 14 | 5.0 | 13 |
| Shear blocking, g/50cm$^2$ | 1540 | 930 | 710 | 590 | 990 | 710 |
| Angle of Friction ( tan θ ) | 1.9 | 0.21 | 0.17 | 0.12 | 0.18 | 0.13 |
| Scratching Property ΔH% | - | 1.6 | 8.3 | 1.8 | 4.1 | 4.2 |
| Staining Roll Property | - | X | ○ | ○ | ○ | ○ |
| Visual Appearance | ◎ | ○ | △ | △ | △ | X |
| Comprehensive Evaluation | X | X | △ | △ | △ | X |

The films obtained by using the polyolefin resin composition of the invention as shown in Examples 1 to 4 have an excellent appearance, are superior in balance between transparency and blocking resistance, and are favorable in slipping property, scratch resistance and fabrication quality. Therefore, they are superior in the balance of various properties.

On the other hand, the products of Comparative Examples 1 and 2 have indeed a good appearance but have bad blocking resistance and a bad slipping property. Therefore, they can not be used in practical application. The products of Comparative Example 3, 4 and 6 have a high LSI and are bad in see-through property of film, improvement of which is one purpose of the invention. In addition, the product of Comparative Example 2 is bad in roll-staining property and that of Comparative Example 3 is bad in scratch property, thus inferior in the balance among various physical properties. Furthermore, the film of Comparative Example 5 is not satisfactory in transparency and blocking resistance.

As described above, the present invention is capable of providing a polyolefin resin composition leading to a film excellent in appearance, superior in balance among transparency, see through property, i.e. flickerless and blocking resistance, and superior in balance between slipping property and fabricability such as scratch resistance and roll-staining property.

The present invention is also capable of providing superior film due to excellent properties as described above.

The film of the present invention can most suitably be used as wrapping materials, for example, materials for foods, fiber products, pharmaceuticals, fertilizers, sundry goods and industrial parts as well as agricultural covering materials and architectural covering materials.

**Claims**

1. A polyolefin resin composition comprising 100 parts by weight of a polyolefin resin and 0.01 to 2.0 parts by weight of an anti-blocking agent (C) comprising 40% to 90% by weight of an anti-blocking agent component (A) having a weight average particle diameter of from 1.5 μm to less than 4.0 μm, and 60% to 10% by weight of an anti-blocking agent component (B) having a weight average particle diameter of from 4.0 μm to 7.0 μm, wherein the content of a component having a particle diameter of 15 μm or more in the anti-blocking agent (C) is 1.0% by weight or less, the ratio of particles of the anti-blocking agent component (A) or the anti-blocking agent component (B), respectively, having a particle size of 1.5 times or more than the weight average particle diameter is less than 10 %, and the difference between the weight average particle diameter of the anti-blocking agent component (A) and that of the anti-blocking agent component (B) is from 0.5 μm to less than 3.0 μm.

2. The polyolefin resin composition according to claim 1, wherein the polyolefin resin is an ethylene resin.

3. The polyolefin resin composition according to claim 1, wherein the anti-blocking agent components (A) and (B) are each in a substantially spherical form.

4. The polyolefin resin composition according to claim 1, wherein the polyolefin resin is an ethylene resin, and the anti-blocking agent components (A) and (B) are each in a substantially spherical form.

5. The polyolefin resin composition according to claim 1, wherein the composition comprises 100 parts by weight of an ethylene resin and 0.05 to 0.6 parts by weight of an anti-blocking agent (C) comprising an anti-blocking agent component (A) having a weight average particle diameter of from 2.0 $\mu$m to less than 4.0 $\mu$m and an anti-blocking agent component (B) having a weight average particle diameter of from 4.0 $\mu$m to 5.5 $\mu$m, and the content of a component having a particle diameter of 15 $\mu$m or more in the anti-blocking agent (C) is 0.5% by weight or less.

6. The polyolefin resin composition according to any one of claims 1-5, further comprising 0.4 parts by weight or less of a fatty acid amide compound based on 100 parts by weight of the polyolefin resin.

7. A film comprising a polyolefin resin composition according to any one of claims 1-5.

8. A film comprising a polyolefin resin composition according to claim 6.

**European Patent Office**

## EUROPEAN SEARCH REPORT

Application Number

EP 99 11 0916

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 618 070 A (HOECHST AG) 5 October 1994 (1994-10-05) * claims 1-21 * | 1-8 | C08K3/00 C08L23/02 C08J5/18 //(C08L23/02, 23:02,101:00) |
| X | EP 0 615 839 A (HOECHST AG) 21 September 1994 (1994-09-21) * claims 1-19 * | 1-8 | |
| X | WO 96 20084 A (COURTAULDS FILMS HOLDINGS ;ALDER PAUL THOMAS (GB)) 4 July 1996 (1996-07-04) * claims 1-14 * | 1-8 | |
| A | EP 0 447 652 A (WOLFF WALSRODE AG) 25 September 1991 (1991-09-25) * page 2, line 33 - line 56 * | 1-8 | |
| | | | TECHNICAL FIELDS SEARCHED (Int.Cl.6) C08K C08J C08L |

The present search report has been drawn up for all claims

| Place of search | Date of completion of the search | Examiner |
|---|---|---|
| THE HAGUE | 16 August 1999 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 99 11 0916

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-1999

| Patent document cited in search report | | | Publication date | Patent family member(s) | | Publication date |
|---|---|---|---|---|---|---|
| EP 0618070 | A | | 05-10-1994 | DE 4310684 A | | 06-10-1994 |
| | | | | DE 59408381 D | | 15-07-1999 |
| | | | | US 5508090 A | | 16-04-1996 |
| | | | | US 5681650 A | | 28-10-1997 |
| EP 0615839 | A | | 21-09-1994 | DE 4308854 A | | 22-09-1994 |
| | | | | DE 59408421 D | | 29-07-1999 |
| | | | | US 5900310 A | | 04-05-1999 |
| | | | | ZA 9401920 A | | 14-10-1994 |
| WO 9620084 | A | | 04-07-1996 | GB 2296465 A | | 03-07-1996 |
| | | | | AU 4271296 A | | 19-07-1996 |
| | | | | CA 2183086 A | | 04-07-1996 |
| | | | | EP 0746467 A | | 11-12-1996 |
| | | | | ZA 9510709 A | | 20-06-1996 |
| EP 0447652 | A | | 25-09-1991 | DE 4006402 A | | 05-09-1991 |
| | | | | CA 2037137 A | | 02-09-1991 |
| | | | | DE 59008536 D | | 30-03-1995 |
| | | | | ES 2068320 T | | 16-04-1995 |
| | | | | JP 5222213 A | | 31-08-1993 |
| | | | | MX 171194 B | | 06-10-1993 |
| | | | | US 5077129 A | | 31-12-1991 |

EPO FORM P0459

For more details about this annex : see Official Journal of the European Patent Office, No. 12/82